(19)

Europäisches Patentamt
European Patent Office
Office européen des brevets

(11) **EP 4 020 425 A2**

(12) **EUROPEAN PATENT APPLICATION**

(43) Date of publication:
**29.06.2022 Bulletin 2022/26**

(21) Application number: **22166607.6**

(22) Date of filing: **05.04.2022**

(51) International Patent Classification (IPC):
**G08G 1/01** *(2006.01)* **G08G 1/052** *(2006.01)*
**G08G 1/056** *(2006.01)* **G08G 1/082** *(2006.01)*
**G08G 1/095** *(2006.01)* **B60W 40/105** *(2012.01)*
**H04W 4/44** *(2018.01)*

(52) Cooperative Patent Classification (CPC):
**G08G 1/0112; B60W 40/105; G08G 1/0129;
G08G 1/0145; G08G 1/052; G08G 1/056;
G08G 1/082; G08G 1/095; H04W 4/44**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.06.2021 CN 202110735957**

(71) Applicant: **Apollo Intelligent Connectivity (Beijing)
Technology Co., Ltd.
Beijing 100176 (CN)**

(72) Inventors:
• **MEI, Yu**
**Beijing, 100176 (CN)**
• **LING, Weicen**
**Beijing, 100176 (CN)**
• **DOU, Xiaoqin**
**Beijing, 100176 (CN)**
• **SHI, Lintao**
**Beijing, 100176 (CN)**

(74) Representative: **Maiwald Patent- und
Rechtsanwaltsgesellschaft mbH
Elisenhof
Elisenstraße 3
80335 München (DE)**

(54) **METHOD AND APPARATUS FOR DETERMINING GREEN WAVE SPEED, ELECTRONIC DEVICE AND STORAGE MEDIUM**

(57) A method for determining a green wave speed, an apparatus for determining a green wave speed, an electronic device and a storage medium is provided. The method includes: obtaining vehicle driving data of at least one vehicle on a green wave coordination line; determining a driving direction of each vehicle based on the vehicle driving data of the corresponding vehicle; determining a vehicle with driving direction matching a green wave coordination direction corresponding to the green wave coordination line as a target vehicle; and determining a green wave speed of a road section between any two adjacent intersections on the green wave coordination line based on the vehicle driving data of the target vehicle. Therefore, accuracy and reliability of a calculation result of the green wave speed may be improved.

EP 4 020 425 A2

obtaining vehicle driving data of at least one vehicle on a green wave coordination line — 101

determining a driving direction of each vehicle based on the vehicle driving data of the corresponding vehicle — 102

determining a vehicle with driving direction matching a green wave coordination direction corresponding to the green wave coordination line as a target vehicle — 103

determining a green wave speed of a road section between any two adjacent intersections on the green wave coordination line based on the vehicle driving data of the target vehicle — 104

FIG. 1

Processed by Luminess, 75001 PARIS (FR)

## Description

### TECHNICAL FIELD

The disclosure relates to the field of artificial intelligence, specially the field of intelligent transportation, and in particular to a method for determining a green wave speed, an apparatus for determining a green wave speed, an electronic device and a storage medium.

### BACKGROUND

A green wave speed refers to a speed at which a vehicle travels smoothly on a green wave band in a trunk road section (i.e., a green wave coordination line) where green wave coordination control is implemented. Green wave speed indicators are important for design, implementation and evaluation of a green wave trunk, which directly determines a form of green wave design and an effect of green wave implementation. That is, the green wave speed indicators are a basis for dynamic green wave design, which is of great significance to improve the effect of green wave design and improve traffic efficiency of road transport.

### SUMMARY

Embodiments of the disclosure provide a method for determining a green wave speed, an apparatus for determining a green wave speed, an electronic device and a storage medium.

According to a first aspect, the disclosure provides a method for determining a green wave speed. The method includes:

> obtaining vehicle driving data of at least one vehicle on a green wave coordination line;
> determining a driving direction of each vehicle based on the vehicle driving data of the corresponding vehicle;
> determining a vehicle with driving direction matching a green wave coordination direction corresponding to the green wave coordination line as a target vehicle; and
> determining a green wave speed of a road section between any two adjacent intersections on the green wave coordination line based on the vehicle driving data of the target vehicle.

According to a second aspect, the disclosure provides an apparatus for determining a green wave speed. The apparatus includes: a first obtaining module, a first determining module, a processing module and a second determining module.

The first obtaining module is configured to obtain vehicle driving data of at least one vehicle on a green wave coordination line.

The first determining module is configured to determine a driving direction of each vehicle based on the vehicle driving data of the corresponding vehicle.

The processing module is configured to determine a vehicle with driving direction matching a green wave coordination direction corresponding to the green wave coordination line as a target vehicle.

The second determining module is configured to determine a green wave speed of a road section between any two adjacent intersections on the green wave coordination line based on the vehicle driving data of the target vehicle.

According to a third aspect, the disclosure provides an electronic device. The electronic device includes: at least one processor and a memory communicatively connected to the at least one processor. The memory stores instructions executable by the at least one processor, when the instructions are executed by the at least one processor, the at least one processor is enabled to perform the method for determining the green wave speed according to the first aspect.

According to a fourth aspect, the disclosure provides a non-transitory computer-readable storage medium storing computer instructions, in which the computer instructions are configured to cause a computer to perform the method for determining the green wave speed according to the first aspect.

According to a fifth aspect, the disclosure provides a computer program product including a computer program, in which when the computer program is executed by a processor, the method for determining the green wave speed according to the first aspect is implemented.

It should be understood that the content described in this section is not intended to identify the key or important features of the embodiments of the disclosure, nor is it intended to limit the scope of the disclosure. Additional features of the disclosure will be easily understood through the following description.

### BRIEF DESCRIPTION OF THE DRAWINGS

The drawings are used to better understand the solution and do not constitute a limitation of the disclosure, in which:

> FIG. 1 is a flowchart illustrating a method for determining a green wave speed according to Embodiment 1 of the disclosure.
> FIG. 2 is a flowchart illustrating a method for determining a green wave speed according to Embodiment 2 of the disclosure.
> FIG. 3 is a flowchart illustrating a method for determining a green wave speed according to Embodiment 3 of the disclosure.
> FIG. 4 is a flowchart illustrating a method for determining a green wave speed according to Embodiment 4 of the disclosure.
> FIG. 5 is a flowchart illustrating a method for determining a green wave speed according to Embodiment 5 of the disclosure.

FIG. 6 is a flowchart illustrating calculating a green wave speed according to the embodiment of the disclosure.

FIG. 7 is a block diagram illustrating an apparatus for determining a green wave speed according to Embodiment 6 of the disclosure.

FIG. 8 is a block diagram illustrating an electronic device for implementing embodiments of the disclosure.

## DETAILED DESCRIPTION

The exemplary embodiments of the disclosure are described below in combination with the accompanying drawings, which include various details of the embodiments of the disclosure to aid in understanding, and should be considered merely exemplary. Therefore, those skilled in the art should know that various changes and modifications may be made to the embodiments described herein without departing from the scope and spirit of the disclosure. For the sake of clarity and brevity, descriptions of well-known features and structures have been omitted from the following description.

In the related art, a green wave speed may be determined based on the following two methods.

The first method is to collect the green wave speed based on a vehicle following investigate by manual.

In detail, the vehicle following investigate by manual requires drivers who have driving skills and are familiar with local road conditions to drive a vehicle, perform a driving test in a forward direction and an opposite direction both for multiple times on the trunk road section where green wave coordination control is implemented, and acquire actual driving speeds in various scenes, such as, an initial stage of green light being on, a middle stage of the green light being on, a final stage of the green light being on, the vehicle being at head of a team, the vehicle being at tail of the team, then determine the green wave speed based on the actual driving speeds.

The second method is to obtain the green wave speed by converting driving time determined based on records of passing vehicles of roadside devices.

In detail, passing vehicle data in cross-section is acquired through vehicle sensing devices such as cameras deployed on roadside, and the records of passing vehicles at a series of intersections on the trunk road section are filtered and matched to determine the driving time, and then the green wave speed of the trunk road section is calculated. This method has high data sampling rate, and may cover most of the vehicles under a case that the devices are normal, and has high reliability.

However, the first method has the following disadvantages: (1) high dependency on personnel and devices; (2) time consuming on a process of acquiring green wave speed indicators, and long link from preparing data acquisition to outputting data indicators; (3) low representativeness due to that the acquired green wave speed indicators only represents a speed of a single vehicle; and (4) impossible to adapt to changes in traffic flow and to represent the real-time green wave speed.

The second method has the following shortcomings. The data acquired by the devices is the vehicle passing data in cross-section, which is impossible to determine a driving situation of the vehicle between detection points, and impossible to determine whether the vehicle stops during the driving process. Therefore, accuracy of the calculated green wave speed is low. In addition, this method has a strong dependence on the device. In a cast that the target trunk road section (that is, a section of the green wave coordination line) has no device or low device coverage, requirements on calculating the green wave speed indicators is impossible to be met.

Therefore, in view of the above problems, the disclosure provides a method for determining a green wave speed, an apparatus for determining a green wave speed, an electronic device and a storage medium.

A method for determining a green wave speed, an apparatus for determining a green wave speed, an electronic device and a storage medium according to the embodiments of the disclosure will be described below with reference to the accompanying drawings.

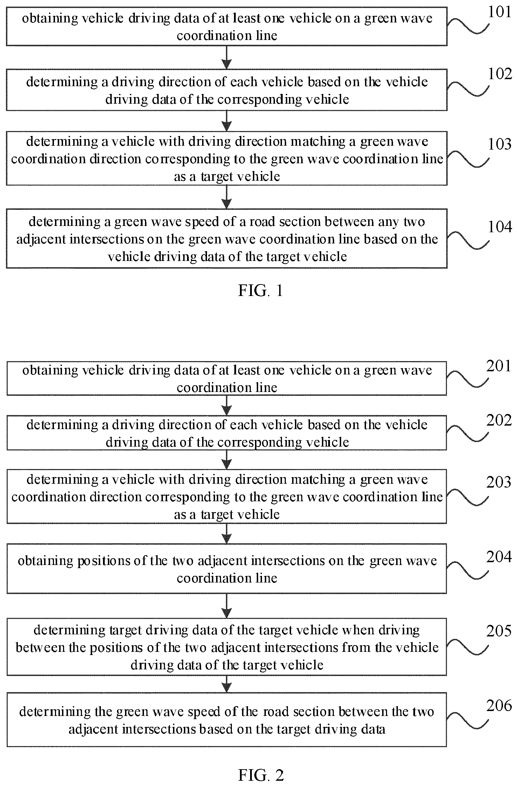

FIG. 1 is a flowchart illustrating a method for determining a green wave speed according to Embodiment 1 of the disclosure.

The embodiment of the disclosure is exemplified by the method for determining a green wave speed being configured in an apparatus for determining a green wave speed, and the apparatus for determining the green wave speed may be applied to any electronic device, to cause the electronic device to perform a function for green wave speed determination.

The electronic device may be any device with computing capability, such as a personal computer (PC), a mobile terminal and a server, and the mobile terminal may be, for example, a vehicle-mounted device, a mobile phone, a tablet computer, a personal digital assistant, a wearable device and other hardware devices with various operating systems, at least one of a touch screen and a display screen.

As shown in FIG. 1, the method for determining the green wave speed includes the following blocks.

In block101, vehicle driving data of at least one vehicle on a green wave coordination line is obtained.

In an embodiment of the disclosure, the green wave coordination line refers to any line or trunk road implementing green wave coordination control.

In an embodiment of the disclosure, the vehicle driving data may include at least one of a coordinate position, an instantaneous speed and a time stamp corresponding to each trajectory point on the green wave coordination line. The coordinate position is a coordinate position of each trajectory point to which the vehicle drives on the green wave coordination line. The instantaneous speed and the time stamp is an instantaneous speed and a time stamp of the vehicle driving to each trajectory point on the green wave coordination line.

In an embodiment of the disclosure, the vehicle driving data may be collected through relevant sensors in the vehicle or mobile terminal. For example, the coordinate position corresponding to each trajectory point may be acquired by a positioning device (such as Global Position System (GPS)) on the vehicle. The instantaneous speed corresponding to each trajectory point may be determined according to data collected by a speed sensor and a displacement sensor on the vehicle.

In the embodiment of the disclosure, the vehicle driving data acquired by the vehicle or the mobile terminal may be integrated into a map device, so as to associate the vehicle driving data with road network data. Therefore, in the disclosure, information of each intersection and each road section in the green wave coordination line may be input into the map device, to obtain the vehicle driving data of each vehicle on the green wave coordination line. For example, the map device may match the vehicle driving data corresponding to respective vehicles with the intersection and the road section of the green wave coordination line according to the input information of each intersection and each road section in the green wave coordination line. Therefore, the driving data of the vehicle matching the intersection and the road section of the green wave coordination line is determined as the vehicle driving data of the corresponding vehicle on the green wave coordination line.

In block102, a driving direction of each vehicle is determined based on the vehicle driving data of the corresponding vehicle.

In the embodiment of the disclosure, the driving direction of the vehicle may be determined according to the vehicle driving data. For example, the driving direction of the vehicle may be determined according to the coordinate position and the time stamp corresponding to each trajectory point in the vehicle driving data.

For example, in response to determining, according to the vehicle driving data, that the vehicle drives to a coordinate position A at time point 1 and to a coordinate position B at time point 2, and the time point 2 is later than the time point 1, it may be determined that the vehicle drives from the coordinate position A to the coordinate position B, and the driving direction is $\overrightarrow{AB}$.

In block103, a vehicle with driving direction matching a green wave coordination direction corresponding to the green wave coordination line is determined as a target vehicle.

It may be understood that each green wave coordination line has a corresponding green wave coordination direction, in which the green wave coordination direction is determined according to a starting point and an end point of the green wave coordination line.

It should be understood that even if the vehicle drives on the green wave coordination line, the driving direction of the vehicle may be different from the green wave coordination direction corresponding to the green wave coordination line. For example, the green wave coordination line is: intersection 1→ intersection 2→ intersection 3→...→intersection n. When the vehicle enters from the intersection 1 and sequentially passes through the intersection 2, the intersection 3, ..., the intersection n, it may be determined that the driving direction of the vehicle matches the green wave coordination direction corresponding to the green wave coordination line. When the vehicle enters from the intersection n and sequentially passes through intersection n-1, intersection n-2, ..., the intersection 1, it may be determined that the driving direction of the vehicle is opposite to the green wave coordination direction corresponding to the green wave coordination line. In addition, a trunk road may correspond to two green wave coordination lines, and the two green wave coordination lines respectively correspond to two green wave coordination directions which are opposite to each other, namely a forward coordination direction and a reverse coordination direction. The reverse coordination direction is a direction opposite to the forward coordination direction.

In the embodiment of the disclosure, the driving directions of respective vehicles may be matched with the green wave coordination direction corresponding to the green wave coordination line. Therefore, the vehicle with the driving direction matching the green wave coordination direction corresponding to the green wave coordination line is determined as the target vehicle.

In block 104, a green wave speed of a road section between any two adjacent intersections on the green wave coordination line is determined based on the vehicle driving data of the target vehicle.

In the embodiment of the disclosure, the green wave speed of the road section between adjacent intersections on the green wave coordination line may be determined according to the vehicle driving data of the target vehicle. In this way, the green wave speed of each road section of the green wave coordination line may be determined according to actual driving data of the vehicle, which may improve accuracy and reliability of a calculation result of the green wave speed.

According to the method for determining the green wave speed of the embodiment of the disclosure, the driving direction of the vehicle is determined according to the vehicle driving data of the vehicle on the green wave coordination line, the vehicle with driving direction matching the green wave coordination direction corresponding to the green wave coordination line is determined as the target vehicle. The green wave speed of the road section between any two adjacent intersections on the green wave coordination line is determined based on the vehicle driving data of the target vehicle. In this way, it is possible to determine the green wave speed of each section of the green wave coordination line according to the actual driving data of the vehicle, which may improve the accuracy and the reliability of the calculation result of the green wave speed.

In order to clearly illustrate how to determine the green wave speed of each road section on the green wave coordination line in the above embodiments, the disclosure provides another method for determining a green wave speed.

FIG. 2 is a flowchart illustrating a method for determining a green wave speed according to Embodiment 2 of the disclosure.

As shown in FIG. 2, the method for determining a green wave speed includes the following blocks.

In block 201, vehicle driving data of at least one vehicle on a green wave coordination line is obtained.

In block 202, a driving direction of each vehicle based on the vehicle driving data of the corresponding vehicle is obtained.

In block 203, a vehicle with driving direction matching a green wave coordination direction corresponding to the green wave coordination line is determined as a target vehicle.

The implementation process of blocks 201 to 203 may refer to the implementation process of the foregoing embodiment, which will not be repeated here.

In block 204, positions of the two adjacent intersections on the green wave coordination line is obtained.

In the embodiment of the disclosure, for any two adjacent intersections on the green wave coordination line, the positions of the two adjacent intersections are obtained. For example, the position of any two adjacent intersections on the green wave coordination line may be obtained from the map device.

In block 205, target driving data of the target vehicle when driving between the positions of the two adjacent intersections is determined from the vehicle driving data of the target vehicle.

In the embodiment of the disclosure, when calculating the green wave speed of the road section between any two adjacent intersections, it is to be obtained the vehicle driving data of the target vehicle on the road section. Therefore, in the disclosure, the target driving data of the target vehicle, which refers to the vehicle driving data of the target vehicle when the target vehicle is between the positions of the two adjacent intersections, may be determined from the vehicle driving data of the target vehicle.

For example, a first coordinate position of a first trajectory point and a second coordinate position of a second trajectory point respectively matching the positions of the two adjacent intersections are determined from the vehicle driving data of the target vehicle. Each trajectory point whose coordinate position is between the first coordinate position and the second coordinate position is determined from the vehicle driving data, so that the determined trajectory points, the first trajectory point, and the second trajectory point may be determined as the target driving data.

In block 206, the green wave speed of the road section between the two adjacent intersections is determined based on the target driving data.

In the embodiment of the disclosure, the green wave speed of the road section between the two adjacent intersections may be determined based on the target driving data.

According to the method for determining the green wave speed of the embodiment of the disclosure, for any two adjacent intersections on the green wave coordination line, the positions of the two adjacent intersections is determined, and the target driving data of the target vehicle when driving between the positions of the two adjacent intersections is determined from the vehicle driving data of the target vehicle. The green wave speed of the road section between the two adjacent intersections is determined based on the target driving data. In this way, it is possible to determine the green wave speed corresponding to each section of the green wave coordination line according to actual driving data of the vehicle, which may improve accuracy and reliability of the determination result.

In a possible implementation of the embodiment of the disclosure, a green wave speed of a road section between two adjacent intersections may be determined based on a coordinate position of each trajectory point of target driving data, and a timestamp corresponding to each trajectory point that a target vehicle drives to. The above process may be described in detail in combination with Embodiment 3.

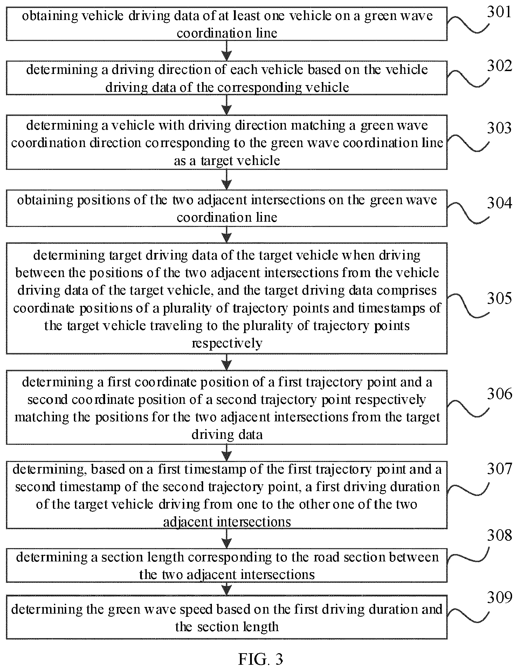

FIG. 3 is a flowchart illustrating a method for determining a green wave speed according to Embodiment 3 of the disclosure.

As shown in FIG. 3, the method for determining the green wave speed includes the following blocks.

In block 301, vehicle driving data of at least one vehicle on a green wave coordination line is obtained.

In block 302, a driving direction of each vehicle is determined based on the vehicle driving data of the corresponding vehicle.

In block 303, a vehicle with driving direction matching a green wave coordination direction corresponding to the green wave coordination line is determined as a target vehicle.

In block 304, positions of the two adjacent intersections on the green wave coordination line are determined.

In block 305, target driving data of the target vehicle when driving between the positions of the two adjacent intersections is determined from the vehicle driving data of the target vehicle. The target driving data includes coordinate positions of a plurality of trajectory points and timestamps of the plurality of trajectory points that the target vehicle drives to respectively.

The implementation process of blocks 301 to 305 may refer to the implementation process of the foregoing embodiment, and details are not described herein.

In block 306, a first coordinate position of a first trajectory point and a second coordinate position of a second trajectory point respectively matching the positions of the two adjacent intersections are determined from the target driving data.

In the embodiment of the disclosure, a trajectory point whose coordinate position matches a position of one of the two adjacent intersections may be determined from the target driving data and as the first trajectory point, and a trajectory point whose coordinate position matches a position of the other intersection in the above two adjacent intersections is determined from the target driving data and as the second trajectory point.

In block 307, a first driving duration of the target vehicle driving from one to the other one of the two adjacent intersections is determined based on a first timestamp of the first trajectory point and a second timestamp of the second trajectory point.

In the embodiment of the disclosure, in response to determining a difference between the time stamp of the first trajectory point and the time stamp of the second trajectory point, the first driving duration of the target vehicle driving from one to the other one of the two adjacent intersections may be obtained.

In block 308, a section length corresponding to the road section between the two adjacent intersections is determined.

In the embodiment of the disclosure, trajectory fitting may be performed according to the coordinate position of each trajectory point between the first trajectory point and the second trajectory point, and a trajectory length obtained by fitting is determined as the section length. Alternatively, the section length corresponding to the road section between the above two adjacent intersections may be directly inquired at the map device, which is not limited in the disclosure.

In block 309, the green wave speed of the road section between the two adjacent intersections is determined based on the first driving duration and the section length.

In a possible implementation of the embodiment of the disclosure, in a case of having one target vehicle, the section length may be directly divided by the first driving duration of the target vehicle, to obtain the green wave speed of the road section between the two adjacent intersections.

In a possible implementation of the embodiment of the disclosure, in a case of having a plurality of target vehicles, a first speed of each of the plurality of target vehicles is determined based on the first driving duration of the corresponding target vehicle and the section length. For example, for each target vehicle, the first speed of the target vehicle may be obtained by dividing the section length by the first driving duration of the target vehicle. Therefore, in the disclosure, the green wave speed of the road section between the two adjacent intersections may be determined according to the first speed of each target vehicle.

For example, an average value of the first speeds of the plurality of target vehicles respectively may be obtained, and the average value may be determined as the green wave speed of the road section between the two adjacent intersections.

For example, in order to improve accuracy and reliability of the calculation result of the green wave speed, the target vehicle that is not under the green wave and fails to coherently pass through each section of the green wave coordination line may be eliminated. In detail, the first speed corresponding to each target vehicle may be screened to save a first speed greater than or equal to a speed threshold, so as to determine the green wave speed of the road section between the two adjacent intersections according to the saved first speed.

For example, the speed threshold may be predetermined as 30km/h, and the target vehicle whose first speed is less than 30 km/h may be eliminated, so as to determine the green wave speed of the sections between two adjacent intersections according to the saved first speed of each target vehicle.

For example, an average value of the saved first speeds may be obtained, and the average value may be determined as the green wave speed of the road section between the two adjacent intersections.

For example, in order to further improve the accuracy and the reliability of the calculation result of the green wave speed, the saved first speeds are ranked in a descending order according to values of the saved first speeds, and a preset number or a preset ratio of the saved first speeds ranked at top are selected. The green wave speed of the road section between the two adjacent intersections is determined according to the selected first speeds.

For example, the preset ratio may be predetermined as 85%, 85% of the top saved first speeds are selected, and an average value of the 85% of the top saved first speeds is determined as the green wave speed of the above section.

According to the method for determining the green wave speed of the embodiment of the disclosure, based on the coordinate position of each trajectory point of the target driving data, and the timestamp of each trajectory point that the target vehicle drives to, the green wave speed of the road section between the adjacent intersections is determined, which may effectively determine the green wave speed of each road section.

In a possible implementation of the embodiment of the disclosure, a green wave speed of a road section between two adjacent intersections may be determined based on a coordinate position of each trajectory point of the target driving data and an instantaneous speed of each trajectory point that the target vehicle drives to. The above process will be described in detail below with reference to Embodiment 4.

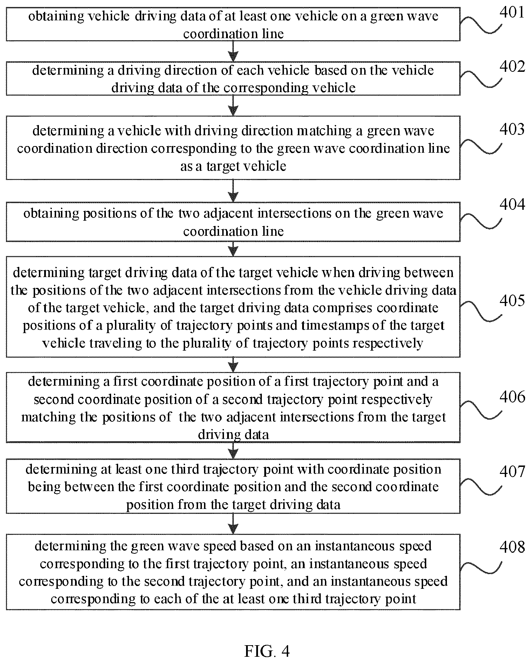

FIG. 4 is a flowchart illustrating a method for determining a green wave speed according to Embodiment 4 of the disclosure.

As shown in FIG. 4, the method for determining the green wave speed includes the following blocks.

In block 401, vehicle driving data of at least one vehicle on a green wave coordination line is obtained.

In block 402, a driving direction of each vehicle is determined based on the vehicle driving data of the corresponding vehicle.

In block 403, a vehicle with driving direction matching a green wave coordination direction corresponding to the green wave coordination line is determined as a target vehicle.

In block 404, positions of the two adjacent intersections on the green wave coordination line are obtained.

In block 405, target driving data of the target vehicle when driving between the positions of the two adjacent intersections is determined from the vehicle driving data of the target vehicle. The target driving data includes the coordinate position of each trajectory point and the instantaneous speed of each trajectory point that the target vehicle drives to.

The implementation process of blocks 401 to 405 may refer to the implementation process of the foregoing embodiment, and details are not described herein.

In block 406, a first coordinate position of a first trajectory point and a second coordinate position of a second trajectory point respectively matching the positions of the two adjacent intersections are determined from the target driving data.

In the embodiment of the disclosure, a trajectory point whose coordinate position matches the position of one of the two adjacent intersections may be determined from the target driving data and as the first trajectory point, and the trajectory point whose coordinate position matches the position of the other intersection in the above two adjacent intersections is determined from the target driving data and as the second trajectory point.

In block 407, at least one third trajectory point with coordinate position being between the first coordinate position and the second coordinate position is determined from the target driving data.

In the embodiment of the disclosure, each trajectory point whose coordinate position is between the first coordinate position and the second coordinate position in the target driving data may be determined, and each determined trajectory point is determined as the third trajectory point.

In block 408, the green wave speed is determined according to an instantaneous speed corresponding to the first trajectory point, an instantaneous speed corresponding to the second trajectory point and an instantaneous speed corresponding to each of the at least one third trajectory point.

In the embodiment of the disclosure, the green wave speed of the road section between the two adjacent intersections is determined according to the instantaneous speed corresponding to the first trajectory point, the instantaneous speed corresponding to the second trajectory point and the instantaneous speed corresponding to each of the at least one third trajectory point.

In a possible implementation of the embodiment of the disclosure, in a case of having one target vehicle, an average value of the instantaneous speed corresponding to the first trajectory point, the instantaneous speed corresponding to the second trajectory point and the instantaneous speed corresponding to each of the at least one third trajectory point may be obtained, and the average value is determined as the green wave speed of the section between two adjacent intersections.

In a possible implementation of the embodiment of the disclosure, in order to avoid an influence of accidental parking and improve accuracy and reliability of the calculation result of the green wave speed, in a case of having one target vehicle, the instantaneous speed corresponding to the first trajectory point, the instantaneous speed corresponding to the second trajectory point and the instantaneous speed corresponding to each of the at least one third trajectory point are screened, and each trajectory point whose instantaneous speed is greater than or equal to a speed threshold is determined as a candidate trajectory point, so that the green wave speed of the road section between the two adjacent intersections may be determined according to the instantaneous speed of the candidate trajectory point. For example, an average value of the instantaneous speeds of the candidate trajectory points may be obtained, and the average value may be determined as the green wave speed of the road section between the two adjacent intersections.

In a possible implementation of the embodiment of the disclosure, in a case of having a plurality of target vehicles, for each target vehicle, the second speed may be determined according to the instantaneous speed corresponding to the first trajectory point, the instantaneous speed corresponding to the second trajectory point and the instantaneous speed corresponding to each of the at least one third trajectory point. The green wave speed of the road section between the two adjacent intersections is determined according to the second speed corresponding to each target vehicle.

For example, for each target vehicle, an average value of the instantaneous speed corresponding to the first trajectory point, the instantaneous speed corresponding to the second trajectory point and the instantaneous speed corresponding to each of the at least one third trajectory point may be obtained, and the average value may be determined as the second speed of the target vehicle of the target vehicle. Alternatively, the instantaneous speeds corresponding to the first trajectory point, the second trajectory point, and each third trajectory point respectively may be screened, and each trajectory point whose instantaneous speed is greater than or equal to the speed threshold may be determined as the candidate trajectory point, so that the second speed of the target vehicle may be determined according to the instantaneous speeds of the candidate trajectory points. For example, the instantaneous speeds of the candidate trajectory points may be averaged to obtain the second speed of the target vehicle.

After determining the second speed of the target vehicle, the average value of the second speed of each target vehicle may be obtained, and the average value may be determined as the green wave speed of the road section between the two adjacent intersections. Alternatively, the second speeds of the target vehicle may be sorted in a descending order according to values of the second speeds, and a preset number of top ranked second speeds or a preset ratio of top ranked second speeds are selected. The green wave speed of the road section between the two adjacent intersections is determined according to each of the selected second speeds. For example, the average value of the selected second speeds may be determined, to obtain the green wave speed of the road section between the two adjacent intersections.

According to the method for determining the green wave speed of the embodiment of the disclosure, the green wave speed of the road section between the two adjacent intersections is determined based on the coordinate position of each trajectory point of the target driving data, and the instantaneous speeds of each trajectory point that the target vehicle drives to, which may achieve effective determination of the green wave speed of each road section.

In a possible implementation of the embodiment of the disclosure, in order to make calculated green wave speed indicators meet green wave speed service requirements, vehicle driving data of a vehicle that does not under the green wave and fails coherently pass through each section of the green wave coordination line may be eliminated. The above process is described in detail in combination with Embodiment 5.

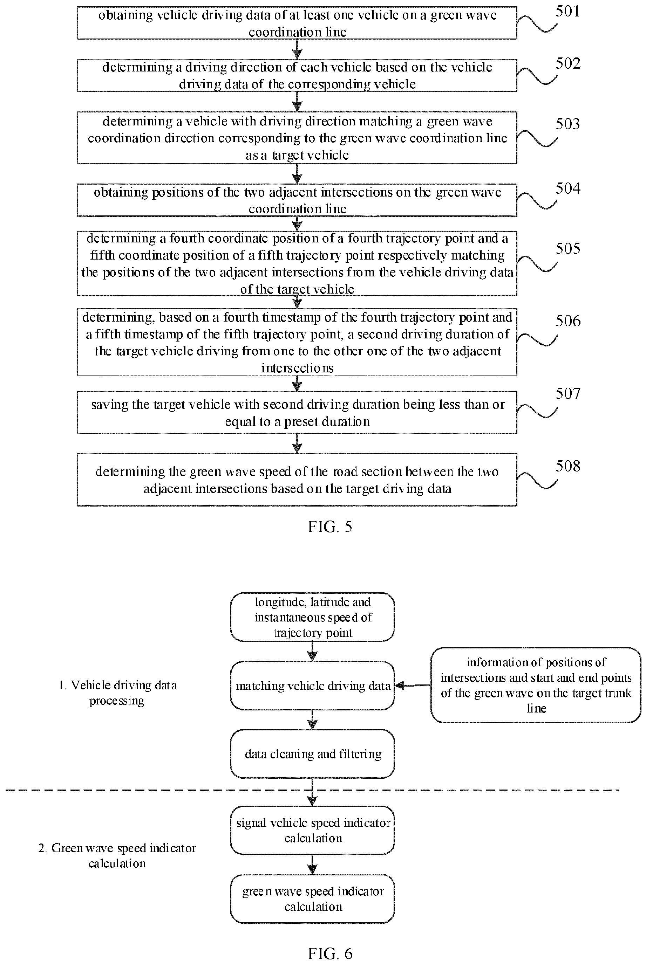

FIG. 5 is a flowchart illustrating a method for determining a green wave speed according to Embodiment 5 of the disclosure.

As shown in FIG. 5, the method for determining the green wave speed may include the following blocks.

In block 501, vehicle driving data of at least one vehicle on a green wave coordination line is obtained.

In block 502, a driving direction of each vehicle based on the vehicle driving data of the corresponding vehicle is obtained.

In block 503, a vehicle with driving direction matching a green wave coordination direction corresponding to the green wave coordination line is determined as a target vehicle.

The implementation process of blocks 501 to 503 may refer to the implementation process of the above embodiment, which is not repeated here.

In block 504, positions of the two adjacent intersections on the green wave coordination line are obtained.

In the embodiment of the disclosure, for any two intersections on the green wave coordination line, the positions of the two intersections are obtained. For example, the position of any two intersections on the green wave coordination line may be obtained from a map device.

In block 505, a fourth coordinate position of a fourth trajectory point and a fifth coordinate position of a fifth trajectory point respectively matching the positions of the two adjacent intersections are obtained from the vehicle driving data of the target vehicle.

In the embodiment of the disclosure, a trajectory point whose coordinate position matches the position of one of the above two intersections may be determined from the vehicle driving data of the target vehicle and as the fourth trajectory point, and a trajectory point whose coordinate position matches the position of the other intersection in the above two intersections is determined from the vehicle driving data of the target vehicle and as the fifth trajectory point.

In block 506, a second driving duration of the target vehicle driving from one to the other one of the two adjacent intersections is determined based on a fourth timestamp of the fourth trajectory point and a fifth timestamp of the fifth trajectory point.

In the embodiment of the present disclosure, in response to determining a difference between the timestamp of the fourth trajectory point and the timestamp of the fifth trajectory point, the second driving duration of the target vehicle driving from one to the other one of the two adjacent intersections may be obtained.

In block 507, the target vehicle with second driving duration being less than or equal to a preset duration is screened and saved.

It may be noted that the preset duration is related to the number of intersections between the above two intersections. For example, when the number of intersections between the two intersections is relatively large, a value of the preset duration is relatively large, and when the number of intersections between the above two intersections is relatively small, the value of the preset duration is relatively small.

It may be understood that when the vehicle is under the green wave, it may continuously pass through each road section on the green wave coordination line. At this time, a duration when the vehicle passes through each road section may be obtained by statistics. For example, the duration of the vehicle passing through 10 intersections without stopping may not be longer than 20 minutes. Therefore, in this disclosure, in order to further improve accuracy and reliability of the calculation result of the green wave speed, respective second driving durations may be screened, the target vehicle whose second driving duration is less than or equal to the preset duration is saved.

In block 508, a green wave speed of a road section between any two adjacent intersections on the green wave coordination line is determined based on the vehicle driving data of the target vehicle.

The implementation process of block 508 may refer to the implementation process of any of the foregoing embodiments, and details are not described herein.

In conclusion, in the disclosure, the green wave speed may be calculated based on the vehicle driving data, and real-time matching, screening and statistical calculation may be performed based on complete journey data of the vehicle in a trunk line through the trajectory point data provided by the vehicle, and the green wave speed of each road section on the target trunk line (referred to as the green wave coordination line in this disclosure) may be obtained. In a calculation process of the green wave speed, on the one hand, it may ensure effectiveness and accuracy of a data source, and on the other hand, it may ensure that the green wave speed indicators output from the calculation is consistent with the service requirements.

As an application scene, as shown in FIG. 6, a calculation process of a green wave speed may include the following two parts.

In a first part, vehicle driving data is processed.

(1) Vehicle driving data matching

Generally, the vehicle driving data is obtained by collecting a real-time position and a real-time speed of the vehicle according to a fixed frequency by related devices on the vehicle. By integrating the vehicle driving data into a map device, the vehicle driving data is associated with road network data, and then by inputting information of intersections and sections on a trunk line according to certain rules, the vehicle driving data may be matched with intersections and sections where a target trunk line is located.

(2) Data cleaning

The vehicle driving data includes three fields: a timestamp of each trajectory point, latitude and longitude coordinates of each trajectory point, and an instantaneous speed of each trajectory point that the vehicle drives to. This data structure may reflect a complete driving process of the vehicle. In order to meet calculation of green wave speed indicators, the vehicle driving data may be cleaned. For example, by taking a single driving vehicle in the target trunk line as a sample, samples with missing trajectory points in the vehicle driving data and samples whose trajectory points deviate from the target trunk line are removed. Then, vehicles whose driving direction is consistent with a green wave coordination direction (entering the green wave and exiting the green wave on the trunk line according to a coordination phase) are selected as effective samples.

In a second part, the green wave speed is calculated.

In order to make calculated green wave speed indicators meet green wave speed service requirements, the vehicle driving data of the vehicle that does not under the green wave and fails to coherently pass through each road section on the green wave line may be eliminated. Each trajectory point in the vehicle driving data of the vehicle samples and the instantaneous speed of each trajectory point may be screened. Firstly, the green wave coordination line may be segmented according to a coordinate of each intersection on the green wave coordination line, to obtain the road sections between the two adjacent intersections.

(1) The green wave speed is calculated based on a coordinate position of a trajectory point.

For a single vehicle, the vehicle driving data of the vehicle is $T=\{T_1(x,y), T_2(x,y),...,T_i(x,y)\}$, where $T_i(x,y)$ indicates a coordinate position of the $i^{th}$ trajectory point, and the vehicle driving data may be divided into k parts according to the coordinate position of each trajectory point, where k is the number of road sections on the green wave coordination line. The trajectory point coordinate $T_i k$ corresponding to each part of the vehicle driving data represents a driving record corresponding to the road section $C(k, k+1)$ where the vehicle drives. For trajectory points on each road section, a difference value between a timestamp of a first trajectory point and a timestamp of a last trajectory point on the road section may be determined as a driving time $t_{k, k+1}$ corresponding to the road section where the vehicle drives, and a section length of the road section is $L_{k, k+1}$, then a driving speed $v_{k,k+1}$ of the single vehicle on the road section $C(k,k+1)$ may be expressed as formula (1):

$$v_{k,k+1} = L_{k,k+1} / t_{k,k+1}; \ (1)$$

The green wave speed $V_{k,k+1}$ of this road section is obtained by calculating speeds of all vehicles within a target time period (that is, a green wave time period) on this road section, and excluding samples with $V_{k,k+1}$ less than 30km/h, and obtaining an average speed of the first 85% of the samples filtered out, as expressed in formula (2):

$$V_{k,k+1} = \sum v_{k,k+1} / m; \ (2)$$

where m is the number of vehicles in the first 85%.

(2) the green wave speed is calculated based on an instantaneous speed of the trajectory point.

The processing of the instantaneous speed $VT=\{VT_1, VT_2, ..., VT_i\}$ of the trajectory point is the same as the processing of the coordinate position. The VT may be divided into k parts according to the coordinate positions of the trajectory points. According to a definition of the green wave speed, trajectory points with $VT_i$ less than 30km/h may be eliminated to avoid an influence of occasional parking, and to ensure that the calculated vehicle speed is a speed at which the vehicle may pass smoothly. The driving speed $v_{k,k+1}$ of the single vehicle on the road section $C(k,k+1)$ may be expressed as formula (3):

$$v_{k,k+1} = \sum VT_{i(k,k+1)} / 1; \quad (3)$$

where 1 represents the number of trajectory points saved on the road section C(k, k+1), i(k, k+1) represents a subscript of the trajectory point at a midpoint of the road section C(k, k+1), $VT_i$ represents an instantaneous speed of the vehicle at a trajectory point i.

An average value of the speeds of all vehicles within the target time period (that is, the green wave time period) on this road section respectively may be determined as a green wave speed $V_{k,k+1}$ of this road section, the calculation method is the same as formula (2).

Therefore, the problems that cannot be solved by traditional means may be solved, and labor time cost or equipment dependence are greatly reduced, which is a key to large-scale use of green waves on urban trunk lines to improve traffic efficiency.

According to the method for determining the green wave speed, the positions of the two adjacent intersections on the green wave coordination line are obtained. The fourth coordinate position of the fourth trajectory point and the fifth coordinate position of the fifth trajectory point respectively matching the positions of the two adjacent intersections are determined from the vehicle driving data of the target vehicle. The second driving duration of the target vehicle driving from one to the other one of the two adjacent intersections is determined based on the fourth timestamp of the fourth trajectory point and the fifth timestamp of the fifth trajectory point. The target vehicle with the second driving duration being less than or equal to the preset duration is saved. The green wave speed of the road section between any two adjacent intersections on the green wave coordination line is determined based on the vehicle driving data of the target vehicle. Therefore, by eliminating the vehicles that is not under the green wave and fails to pass through the green wave coordination line coherently, accuracy and reliability of the determination result of the green wave speed on each road section may be further improved.

The disclosure provides an apparatus for determining a green wave speed corresponding to the method for determining a green wave speed according to FIG. 1 to FIG. 5, and the apparatus for determining a green wave speed according to the embodiments of the disclosure corresponds to the method for determining a green wave speed according to the embodiments of FIG. 1 to FIG. 5. Therefore, the embodiments of the method for determining a green wave speed are also applicable to the apparatus for determining a green wave speed according to the embodiments of the disclosure, which will not be described in detail in the embodiments of the disclosure.

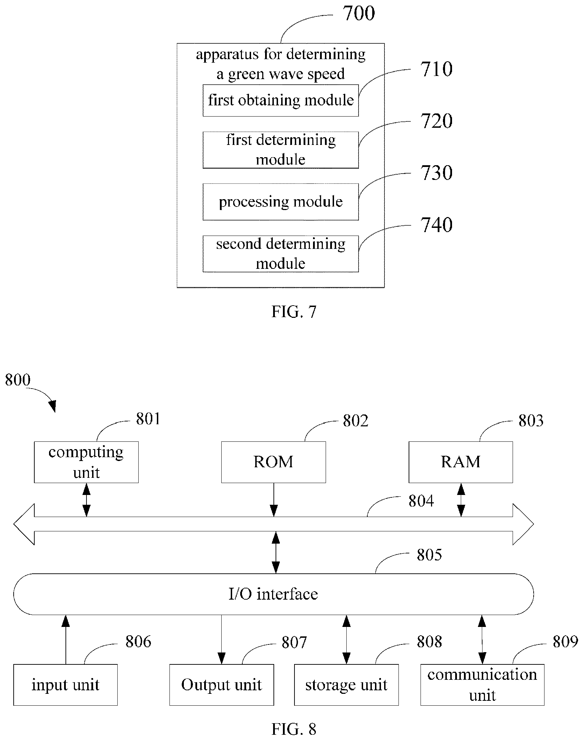

FIG. 7 is a block diagram illustrating an apparatus for determining a green wave speed 700 according to Embodiment 6 of the disclosure.

As shown in FIG. 7, the apparatus for determining a green wave speed 700 may include: a first obtaining module 710, a first determining module 720, a processing module 730 and a second determining module 740.

The first obtaining module 710 is configured to obtain vehicle driving data of at least one vehicle on a green wave coordination line.

The first determining module 720 is configured to determine a driving direction of each vehicle based on the vehicle driving data of the corresponding vehicle.

The processing module 730 is configured to determine a vehicle with driving direction matching a green wave coordination direction corresponding to the green wave coordination line as a target vehicle.

The second determining module 740 is configured to determine a green wave speed of a road section between any two adjacent intersections on the green wave coordination line based on the vehicle driving data of the target vehicle.

In a possible implementation of the embodiment of the disclosure, the second determining module 740 is configured to: obtain positions of the two adjacent intersections on the green wave coordination line; determine target driving data of the target vehicle when driving between the positions of the two adjacent intersections from the vehicle driving data of the target vehicle; and determine the green wave speed of the road section between the two adjacent intersections based on the target driving data.

In a possible implementation of the embodiment of the disclosure, the target driving data includes coordinate positions of a plurality of trajectory points and timestamps of the plurality of trajectory points that the target vehicle drives to respectively, and the second determining module 740 is further configured to: determine a first coordinate position of a first trajectory point and a second coordinate position of a second trajectory point respectively matching the positions of the two adjacent intersections from the target driving data; determine, based on a first timestamp of the first trajectory point and a second timestamp of the second trajectory point, a first driving duration of the target vehicle driving from one to the other one of the two adjacent intersections; determine a section length corresponding to the road section between the two adjacent intersections; and determine the green wave speed based on the first driving duration and the section length.

In a possible implementation of the embodiment of the disclosure, in a case of determining a plurality of target vehicles, the second determining module 740 is further configured to: determine a first speed of each of the plurality of target vehicles based on the first driving duration of the corresponding target vehicle and the section length; save first speeds greater than or equal to a speed threshold by screening the first speeds of the plurality of target vehicles; and determine the green wave speed based on the saved first speeds.

In a possible implementation of the embodiment of the disclosure, the target driving data includes a coordinate position of each trajectory point and an instantaneous speed of the target vehicle driving to each trajectory point, and the second determining module 740 is further configured to: determine a first coordinate position of a first trajectory point and a second coordinate position of a second trajectory point respectively matching the positions of the two adjacent intersections from the target driving data; determine at least one third trajectory point with coordinate position being between the first coordinate position and the second coordinate position from the target driving data; and determine the green wave speed based on an instantaneous speed corresponding to the first trajectory point, an instantaneous speed corresponding to the second trajectory point, and an instantaneous speed corresponding to each of the at least one third trajectory point.

In a possible implementation of the embodiment of the disclosure, the second determining module 740 is further configured to: save candidate trajectory points with instantaneous speeds being greater than or equal to a speed threshold by screening the instantaneous speed corresponding to the first trajectory point, the instantaneous speed corresponding to the second trajectory point, and the instantaneous speed corresponding to each of the at least one third trajectory point; and determine the green wave speed based on instantaneous speeds of the candidate trajectory points.

In a possible implementation of the embodiment of the disclosure, the vehicle driving data includes timestamps of respective trajectory points that the target vehicle drives to, and the apparatus for determining a green wave speed 700 includes: a second obtaining module, a third determining module, a fourth determining module and a screening module.

The second obtaining module is configured to obtain positions of the two intersections on the green wave coordination line.

The third determining module is configured to determine a fourth coordinate position of a fourth trajectory point and a fifth coordinate position of a fifth trajectory point respectively matching the positions of the two adjacent intersections from the vehicle driving data of the target vehicle.

The fourth determining module is configured to determine, based on a fourth timestamp of the fourth trajectory point and a fifth timestamp of the fifth trajectory point, a second driving duration of the target vehicle driving from one to the other one of the two adjacent intersections.

The screening module is configured to save the target vehicle with second driving duration being less than or equal to a preset duration.

With the apparatus for determining a green wave speed of the embodiment of the disclosure, the driving direction of the vehicle is determined according to the vehicle driving data of the vehicle on the green wave coordination line, the vehicle with driving direction matching the green wave coordination direction corresponding to the green wave coordination line is determined as the target vehicle. The green wave speed of the road section between any two adjacent intersections on the green wave coordination line is determined based on the vehicle driving data of the target vehicle. In this way, it is possible to determine the green wave speed of each section of the green wave coordination line according to actual driving data of the vehicle, which may improve accuracy and reliability of the green wave speed calculation result.

In order to realize the above embodiments, the disclosure also provides a kind of electronic device. The electronic device includes the anchor client or the server in the above embodiments, and the electronic device includes at least one processor and a memory communicatively connected to the at least one processor. The memory stores instructions executable by the at least one processor, and when the instructions are executed by the at least one processor, the at least one processor is configured to execute the method for determining the green wave speed according to any of the above embodiments of the disclosure.

In order to realize the above embodiments, the disclosure also provides a non-transitory computer-readable storage medium storing computer instructions. The computer instructions are configured to make the computer execute the method for determining the green wave speed according to any of the embodiments of the disclosure.

In order to realize the above embodiments, the disclosure also provides a kind of computer program product including computer programs. When the computer program is executed by the processor, the method for determining the green wave speed according to any of the above embodiments of the disclosure is executed.

According to embodiments of the disclosure, the disclosure also provides an electronic device, a readable storage medium and a computer program product.

FIG. 8 is a block diagram illustrating an electronic device according to embodiments of the disclosure. The electronic device may include the server and the client in the above embodiments. Electronic devices are intended to represent various forms of digital computers, such as laptop computers, desktop computers, workbenches, personal digital assistants, servers, blade servers, mainframe computers, and other suitable computers. Electronic devices may also represent various forms of mobile devices, such as personal digital processing, cellular phones, smart phones, wearable devices, and other similar computing devices. The components shown here, their connections and relations, and their functions are merely examples, and are not intended to limit the implementation of the disclosure described and/or required herein.

As illustrated in FIG. 8, the device 800 includes a computing unit 801 performing various appropriate actions and processes based on computer programs stored in a read-only memory (ROM) 802 or computer programs loaded from the storage unit 808 to a random access memory (RAM) 803. In the RAM 803, various programs and data required for the operation of the device 800 are stored. The computing unit 801, the ROM 802, and the RAM 803 are connected to each other through a bus 804. An input/output (I/O) interface 805 is also connected to the bus 804.

Components in the device 800 are connected to the I/O interface 805, including: an inputting unit 806, such as a keyboard, a mouse; an outputting unit 807, such as various types of displays, speakers; a storage unit 808, such as a disk, an optical disk; and a communication unit 809, such as network cards, modems, wireless communication transceivers, and the like. The communication unit 809 allows the device 800 to exchange information/data with other devices through a computer network such as the Internet and/or various telecommunication networks.

The computing unit 801 may be various general-purpose and/or dedicated processing components with processing and computing capabilities. Some examples of computing unit 801 include, but are not limited to, a central processing unit (CPU), a graphics processing unit (GPU), various dedicated artificial intelligence (AI) computing chips, various computing units that run machine learning model algorithms, and a digital signal processor (DSP), and any appropriate processor, controller and microcontroller. The computing unit 801 executes the various methods and processes described above, such as the method for determining a green wave speed. For example, in some embodiments, the method may be implemented as a computer software program, which is tangibly contained in a machine-readable medium, such as the storage unit 808. In some embodiments, part or all of the computer program may be loaded and/or installed on the device 800 via the ROM 802 and/or the communication unit 809. When the computer program is loaded on the RAM 803 and executed by the computing unit 801, one or more steps of the method described above may be executed. Alternatively, in other embodiments, the computing unit 801 may be configured to perform the method for determining a green wave speed in any other suitable manner (for example, by means of firmware).

Various implementations of the systems and techniques described above may be implemented by a digital electronic circuit system, an integrated circuit system, Field Programmable Gate Arrays (FPGAs), Application Specific Integrated Circuits (ASICs), Application Specific Standard Products (ASSPs), System on Chip (SOCs), Load programmable logic devices (CPLDs), computer hardware, firmware, software, and/or a combination thereof. These various embodiments may be implemented in one or more computer programs, the one or more computer programs may be executed and/or interpreted on a programmable system including at least one programmable processor, which may be a dedicated or general programmable processor for receiving data and instructions from the storage system, at least one input device and at least one output device, and transmitting the data and instructions to the storage system, the at least one input device and the at least one output device.

The program code configured to implement the method of the disclosure may be written in any combination of one or more programming languages. These program codes may be provided to the processors or controllers of general-purpose computers, dedicated computers, or other programmable data processing devices, so that the program codes, when executed by the processors or controllers, enable the functions/operations specified in the flowchart and/or block diagram to be implemented. The program code may be executed entirely on the machine, partly executed on the machine, partly executed on the machine and partly executed on the remote machine as an independent software package, or entirely executed on the remote machine or server.

In the context of the disclosure, a machine-readable medium may be a tangible medium that may contain or store a program for use by or in connection with an instruction execution system, apparatus, or device. The machine-readable medium may be a machine-readable signal medium or a machine-readable storage medium. A machine-readable medium may include, but is not limited to, an electronic, magnetic, optical, electromagnetic, infrared, or semiconductor system, apparatus, or device, or any suitable combination of the foregoing. More specific examples of machine-readable storage media include electrical connections based on one or more wires, portable computer disks, hard disks, random access memories (RAM), read-only memories (ROM), erasable programmable read-only memories (EPROM or flash memory), fiber optics, compact disc read-only memories (CD-ROM), optical storage devices, magnetic storage devices, or any suitable combination of the foregoing.

In order to provide interaction with a user, the systems and techniques described herein may be implemented on a computer having a display device (e.g., a Cathode Ray Tube (CRT) or a Liquid Crystal Display (LCD) monitor for displaying information to a user); and a keyboard and pointing device (such as a mouse or trackball) through which the user may provide input to the computer. Other kinds of devices may also be used to provide interaction with the user. For example, the feedback provided to the user may be any form of sensory feedback (e.g., visual feedback, auditory feedback, or haptic feedback), and the input from the user may be received in any form (including acoustic input, voice input, or tactile input).

The systems and technologies described herein may be implemented in a computing system that includes background components (for example, a data server), or a computing system that includes middleware components (for example, an application server), or a computing system that includes front-end components (for example, a user computer with a graphical user interface or a web browser, through which the user may interact with the implementation of the systems and technologies described herein), or include such background components, intermediate computing components, or any combination of front-end components. The components of the system may be interconnected by any form or medium of digital data communication (e.g., a communication network). Examples of communication networks include: local area network (LAN), wide area network (WAN), the Internet and Block-chain network.

The computer system may include a client and a server. The client and server are generally remote from each other and interacting through a communication network. The client-server relation is generated by computer programs running on the respective computers and having a client-server relation with each other. The server may be a cloud server, also known as a cloud computing server or a cloud host, which is a host product in the cloud computing service system, to solve the traditional physical host with a Virtual Private Server (VPS) service, which has the defects of difficult management and weak business expansibility. The server may also be a server for a distributed system, or a server that incorporates a block-chain.

It is noted that Artificial Intelligence is a discipline that studies certain thinking processes and intelligent behaviors (such as learning, reasoning, thinking and planning) that allow computers to simulate life, which has both hardware-level technologies and software-level technologies. Artificial intelligence hardware technology generally includes technologies such as sensors, dedicated artificial intelligence chips, cloud computing, distributed storage, and big data processing. Artificial intelligence software technology generally includes computer vision technology, speech recognition technology, natural language processing technology, and its learning/deep learning, big data processing technology, knowledge map technology and other aspects.

According to the technical solution of the embodiment of the disclosure, the driving direction of the vehicle is determined according to the vehicle driving data of the vehicle on the green wave coordination line, the vehicle with driving direction matching the green wave coordination direction corresponding to the green wave coordination line is determined as the target vehicle. The green wave speed of the road section between any two adjacent intersections on the green wave coordination line is determined based on the vehicle driving data of the target vehicle. In this way, it is possible to determine the green wave speed of each section of the green wave coordination line according to actual driving data of the vehicle, which may improve accuracy and reliability of the green wave speed calculation result.

It should be understood that the various forms of processes shown above may be used to reorder, add or delete steps. For example, the steps described in the disclosure could be performed in parallel, sequentially, or in a different order, as long as the desired result of the technical solution disclosed in the disclosure is achieved, which is not limited herein.

The above specific embodiments do not constitute a limitation on the protection scope of the disclosure. Those skilled in the art should understand that various modifications, combinations, sub-combinations and substitutions may be made according to design requirements and other factors. Any modification and improvement made within the principle of the disclosure shall be included in the protection scope of the disclosure.

**Claims**

1. A method for determining a green wave speed, comprising:

   obtaining (101, 201, 301, 401, 501) vehicle driving data of at least one vehicle on a green wave coordination line;
   determining (102, 202, 302, 402, 502) a driving direction of each vehicle based on the vehicle driving data of the corresponding vehicle;
   determining (103, 203, 303, 403, 503) a vehicle with driving direction matching a green wave coordination direction corresponding to the green wave coordination line as a target vehicle; and
   determining (104, 508) a green wave speed of a road section between any two adjacent intersections on the green wave coordination line based on the vehicle driving data of the target vehicle.

2. The method according to claim 1, wherein determining (104) the green wave speed of the road section between any two adjacent intersections on the green wave coordination line based on the vehicle driving data of the target vehicle, comprises:

   obtaining (204, 304, 404) positions of the two adjacent intersections on the green wave coordination line;
   determining (205, 305, 405) target driving data of the target vehicle when driving between the positions of the two adjacent intersections from the vehicle driving data of the target vehicle; and
   determining (206) the green wave speed of the road section between the two adjacent intersections based on the target driving data.

3. The method according to claim 2, wherein the target driving data comprises coordinate positions of a plurality of trajectory points and timestamps of the plurality of trajectory points that the target vehicle drive to respectively; and
   determining (206) the green wave speed of the road section between the two adjacent intersections based on the target driving data comprises:

determining (306) a first coordinate position of a first trajectory point and a second coordinate position of a second trajectory point respectively matching the positions of the two adjacent intersections from the target driving data;
determining (307), based on a first timestamp of the first trajectory point and a second timestamp of the second trajectory point, a first driving duration of the target vehicle driving from one to the other one of the two adjacent intersections;
determining (308) a section length corresponding to the road section between the two adjacent intersections; and
determining (309) the green wave speed based on the first driving duration and the section length.

4. The method according to claim 3, wherein in a case of determining a plurality of target vehicles, determining (309) the green wave speed based on the first driving duration and the section length comprises:

    determining a first speed of each of the plurality of target vehicles based on the first driving duration of the corresponding target vehicle and the section length;
    saving first speeds greater than or equal to a speed threshold by screening the first speeds of the plurality of target vehicles; and
    determining the green wave speed based on the saved first speeds.

5. The method according to any of claims 2 to 4, wherein the target driving data comprises a coordinate position of each trajectory point and an instantaneous speed of the target vehicle driving to each trajectory point; and
wherein determining (206) the green wave speed of the road section between the two adjacent intersections based on the target driving data comprises:

    determining (406) a first coordinate position of a first trajectory point and a second coordinate position of a second trajectory point respectively matching the positions of the two adjacent intersections from the target driving data;
    determining (407) at least one third trajectory point with coordinate position being between the first coordinate position and the second coordinate position from the target driving data; and
    determining (408) the green wave speed based on an instantaneous speed corresponding to the first trajectory point, an instantaneous speed corresponding to the second trajectory point, and an instantaneous speed corresponding to each of the at least one third trajectory point.

6. The method according to claim 5, wherein determining (408) the green wave speed based on the instantaneous speed corresponding to the first trajectory point, the instantaneous speed corresponding to the second trajectory point, and the instantaneous speed corresponding to each of the at least one third trajectory point, comprises:

    saving candidate trajectory points with instantaneous speeds being greater than or equal to a speed threshold by screening the instantaneous speed corresponding to the first trajectory point, the instantaneous speed corresponding to the second trajectory point, and the instantaneous speed corresponding to each of the at least one third trajectory point; and
    determining the green wave speed based on instantaneous speeds of the candidate trajectory points.

7. The method according to any one of claims 1-6, wherein the vehicle driving data comprises timestamps of respective trajectory points that the target vehicle drive to ; and
prior to determining (104, 508) the green wave speed of the road section between the two adjacent intersections on the green wave coordination line based on the vehicle driving data of the target vehicle, the method further comprises:

    obtaining (504) positions of the two intersections on the green wave coordination line;
    determining (505) a fourth coordinate position of a fourth trajectory point and a fifth coordinate position of a fifth trajectory point respectively matching the positions of the two adjacent intersections from the vehicle driving data of the target vehicle;
    determining (506), based on a fourth timestamp of the fourth trajectory point and a fifth timestamp of the fifth trajectory point, a second driving duration of the target vehicle driving from one to the other one of the two adjacent intersections; and
    saving (507) the target vehicle with second driving duration being less than or equal to a preset duration.

8. An apparatus (700) for determining a green wave speed, comprising:

    a first obtaining module (710), configured to obtain vehicle driving data of at least one vehicle on a green wave coordination line;
    a first determining module (720), configured to determine a driving direction of each vehicle based on the vehicle driving data of the corresponding vehicle;

a processing module (730), configured to determine a vehicle with driving direction matching a green wave coordination direction corresponding to the green wave coordination line as a target vehicle; and

a second determining module (740), configured to determine a green wave speed of a road section between any two adjacent intersections on the green wave coordination line based on the vehicle driving data of the target vehicle.

9. The apparatus according to claim 8, wherein the second determining module (740) is further configured to:

    obtain positions of the two adjacent intersections on the green wave coordination line;
    determine target driving data of the target vehicle when driving between the positions of the two adjacent intersections from the vehicle driving data of the target vehicle; and
    determine the green wave speed of the road section between the two adjacent intersections based on the target driving data.

10. The apparatus according to claim 9, wherein the target driving data comprises coordinate positions of a plurality of trajectory points and timestamps of the plurality of trajectory points that the target vehicle drive to respectively, and the second determining module (740) is further configured to:

    determine a first coordinate position of a first trajectory point and a second coordinate position of a second trajectory point respectively matching the positions of the two adjacent intersections from the target driving data;
    determine, based on a first timestamp of the first trajectory point and a second timestamp of the second trajectory point, a first driving duration of the target vehicle driving from one to the other one of the two adjacent intersections;
    determine a section length corresponding to the road section between the two adjacent intersections; and
    determine the green wave speed based on the first driving duration and the section length.

11. The apparatus according to claim 9 or 10, wherein the target driving data comprises a coordinate position of each trajectory point and an instantaneous speed of the target vehicle driving to each trajectory point, and the second determining module (740) is further configured to:

    determine a first coordinate position of a first trajectory point and a second coordinate position of a second trajectory point respectively matching the positions of the two adjacent intersections from the target driving data;
determine at least one third trajectory point with coordinate position being between the first coordinate position and the second coordinate position from the target driving data; and
determine the green wave speed based on an instantaneous speed corresponding to the first trajectory point, an instantaneous speed corresponding to the second trajectory point, and an instantaneous speed corresponding to each of the at least one third trajectory point.

12. The apparatus according to any one of claims 8-11, wherein the vehicle driving data comprises timestamps of the target vehicle driving to respective trajectory points, and the apparatus (700) further comprises:

    a second obtaining module, configured to obtain positions of the two intersections on the green wave coordination line;
    a third determining module, configured to determine a fourth coordinate position of a fourth trajectory point and a fifth coordinate position of a fifth trajectory point respectively matching the positions of the two adjacent intersections from the vehicle driving data of the target vehicle;
    a fourth determining module, configured to determine, based on a fourth timestamp of the fourth trajectory point and a fifth timestamp of the fifth trajectory point, a second driving duration of the target vehicle driving from one to the other one of the two adjacent intersections; and
    a screening module, configured to save the target vehicle with second driving duration being less than or equal to a preset duration.

13. An electronic device, comprising:

    at least one processor; and
    a memory communicatively connected to the at least one processor; wherein,
    the memory stores instructions executable by the at least one processor, when the instructions are executed by the at least one processor, the at least one processor is enabled to perform the method for determining a green wave speed according to any of claims 1-7.

14. A non-transitory computer-readable storage medium storing computer instructions, wherein the computer instructions are configured to cause a computer to perform the method for determining a green wave speed according to any of claims 1-7.

15. A computer program product comprising a computer program, wherein when the computer program is executed by a processor, and the method for determining a green wave speed according to any of claims 1-7 is implemented.

obtaining vehicle driving data of at least one vehicle on a green wave coordination line ~ 101

determining a driving direction of each vehicle based on the vehicle driving data of the corresponding vehicle ~ 102

determining a vehicle with driving direction matching a green wave coordination direction corresponding to the green wave coordination line as a target vehicle ~ 103

determining a green wave speed of a road section between any two adjacent intersections on the green wave coordination line based on the vehicle driving data of the target vehicle ~ 104

FIG. 1

obtaining vehicle driving data of at least one vehicle on a green wave coordination line ~ 201

determining a driving direction of each vehicle based on the vehicle driving data of the corresponding vehicle ~ 202

determining a vehicle with driving direction matching a green wave coordination direction corresponding to the green wave coordination line as a target vehicle ~ 203

obtaining positions of the two adjacent intersections on the green wave coordination line ~ 204

determining target driving data of the target vehicle when driving between the positions of the two adjacent intersections from the vehicle driving data of the target vehicle ~ 205

determining the green wave speed of the road section between the two adjacent intersections based on the target driving data ~ 206

FIG. 2

obtaining vehicle driving data of at least one vehicle on a green wave coordination line $\quad\sim 301$

determining a driving direction of each vehicle based on the vehicle driving data of the corresponding vehicle $\quad\sim 302$

determining a vehicle with driving direction matching a green wave coordination direction corresponding to the green wave coordination line as a target vehicle $\quad\sim 303$

obtaining positions of the two adjacent intersections on the green wave coordination line $\quad\sim 304$

determining target driving data of the target vehicle when driving between the positions of the two adjacent intersections from the vehicle driving data of the target vehicle, and the target driving data comprises coordinate positions of a plurality of trajectory points and timestamps of the target vehicle traveling to the plurality of trajectory points respectively $\quad\sim 305$

determining a first coordinate position of a first trajectory point and a second coordinate position of a second trajectory point respectively matching the positions for the two adjacent intersections from the target driving data $\quad\sim 306$

determining, based on a first timestamp of the first trajectory point and a second timestamp of the second trajectory point, a first driving duration of the target vehicle driving from one to the other one of the two adjacent intersections $\quad\sim 307$

determining a section length corresponding to the road section between the two adjacent intersections $\quad\sim 308$

determining the green wave speed based on the first driving duration and the section length $\quad\sim 309$

FIG. 3

obtaining vehicle driving data of at least one vehicle on a green wave coordination line ⟶ 401

determining a driving direction of each vehicle based on the vehicle driving data of the corresponding vehicle ⟶ 402

determining a vehicle with driving direction matching a green wave coordination direction corresponding to the green wave coordination line as a target vehicle ⟶ 403

obtaining positions of the two adjacent intersections on the green wave coordination line ⟶ 404

determining target driving data of the target vehicle when driving between the positions of the two adjacent intersections from the vehicle driving data of the target vehicle, and the target driving data comprises coordinate positions of a plurality of trajectory points and timestamps of the target vehicle traveling to the plurality of trajectory points respectively ⟶ 405

determining a first coordinate position of a first trajectory point and a second coordinate position of a second trajectory point respectively matching the positions of the two adjacent intersections from the target driving data ⟶ 406

determining at least one third trajectory point with coordinate position being between the first coordinate position and the second coordinate position from the target driving data ⟶ 407

determining the green wave speed based on an instantaneous speed corresponding to the first trajectory point, an instantaneous speed corresponding to the second trajectory point, and an instantaneous speed corresponding to each of the at least one third trajectory point ⟶ 408

FIG. 4

obtaining vehicle driving data of at least one vehicle on a green wave coordination line | 501

determining a driving direction of each vehicle based on the vehicle driving data of the corresponding vehicle | 502

determining a vehicle with driving direction matching a green wave coordination direction corresponding to the green wave coordination line as a target vehicle | 503

obtaining positions of the two adjacent intersections on the green wave coordination line | 504

determining a fourth coordinate position of a fourth trajectory point and a fifth coordinate position of a fifth trajectory point respectively matching the positions of the two adjacent intersections from the vehicle driving data of the target vehicle | 505

determining, based on a fourth timestamp of the fourth trajectory point and a fifth timestamp of the fifth trajectory point, a second driving duration of the target vehicle driving from one to the other one of the two adjacent intersections | 506

saving the target vehicle with second driving duration being less than or equal to a preset duration | 507

determining the green wave speed of the road section between the two adjacent intersections based on the target driving data | 508

FIG. 5

longitude, latitude and instantaneous speed of trajectory point

1. Vehicle driving data processing

matching vehicle driving data

information of positions of intersections and start and end points of the green wave on the target trunk line

data cleaning and filtering

2. Green wave speed indicator calculation

signal vehicle speed indicator calculation

green wave speed indicator calculation

FIG. 6

700

apparatus for determining
a green wave speed

first obtaining module — 710

first determining
module — 720

processing module — 730

second determining
module — 740

FIG. 7

800

computing
unit — 801

ROM — 802

RAM — 803

804

805

I/O interface

input unit — 806

Output unit — 807

storage unit — 808

communication
unit — 809

FIG. 8